# EUROPEAN PATENT APPLICATION

(11) **EP 0 797 918 A1**
(43) Date of publication of application: **01.10.1997**
(21) Application number: 97104783.2
(22) Date of filing: 20.03.1997
(51) Int. Cl.: A22C 13/00

(54) **Casing for smoking and storage of foodstuffs**

(30) Priority: 29.03.1996 JP 75651/96
(71) Applicant: Gunze Kobunshi Corporation, Isehara City, Kanagawa (JP)
(72) Inventor: Arai, Ichiro, Isehara City, Kanagawa (JP)
(74) Representative: Reinhard - Skuhra - Weise & Partner

(57) **Abstract**

A casing for smoking and storage of foodstuffs is provided. The casing comprises a heat-shrinkable tubular laminate including at least one layer of a polyamide resin and at least one layer of a modified polyolefin resin having adhesiveness to said polyamide resin, said layer of modified polyolefin resin having a thickness of from 1 to 25µm, or the casing comprises a heat-shrinkable tubular laminate including at least one layer of a polyamide resin, at least one intermediate layer of a modified polyolefin resin having adhesiveness to said polyamide resin, and at least one layer of a polyolefin resin, said modified polyolefin resin layer and the polyolefin resin layer having a combined thickness of from 1 to 25µm. The casing is effective as a replacement for both the primary casing and the secondary casing of the prior art.

## Description

### BACKGROUND OF THE INVENTION

### 1. Field of the invention:

The present invention relates to a casing for smoking and storage of foodstuffs. This invention has particular application to casings for stuffing with raw meat for production of smoked meat products such as ham and sausage, and preparation of other smoked foodstuffs capable of long periods of storage.

### 2. Description of the prior art:

Smoked foodstuffs in casings are usually produced for sale using stepwise two casings referred as the primary casing and the secondary casing. The primary casing functions to retain the shape of the foodstuff for smoking, and generally composed of materials having superior gas permeability such that smoking gas components may penetrate to the inside of the casing. However, water vapor and steam can also penetrate these materials having superior gas permeability, resulting in the stuffed contents of the primary casing losing weight over time, thus reducing the commercial value of the product.

Accordingly, the primary casing is overlaid with or replaced by a secondary casing made of materials selected for low water vapor and steam permeability after smoking.

Presently, natural casings such as animal intestines and fibrous casing made of viscose-impregnated papers are employed as the primary casings for smoking meat. These casings have advantages of being able to be smoked and exhibit superior smoking effects. However, animal intestines are of limited supply relative to demand for smoking casings for ham and sausage, and have further disadvantage in that uniformly shaped ham and sausage are difficult to obtain due to irregular shapes of the intestines. Further, the animal intestines may be of unsatisfactory strength frequently, since the strength of the intestines depends on the health or condition of the source animals.

Fibrous casings are employed to supplement the short supply of natural casings such as animal intestines. However, fibrous casings have disadvantages such as unpleasant odors, degradation during a long term storage and being stiff and tough, thereby requiring immersion in water to provide flexibility prior to stuffing with the raw meat for ham or sausage. Further, since the semitransparent, white appearance of the paper based fibrous casing substantially conceals the meat product, rendering the products as manufactured unacceptable to markets, especially to the Japanese markets, it is necessary to remove the fibrous casing after completion of the smoking.

The smoked products is then repacked with a transparent plastic wrapping as the secondary casing for the storage and sale. The repacking is a troublesome work and provides an opportunity for contamination of the product with various germs. Furthermore, the high steam permeability of the casing results in significant weight loss of the meat during smoking. Further, the production of the viscose raw material causes environmental pollution.

JP-B-6-73428 teaches the use of a single layered smoking casing made of a polyamide film or a polyamide-base blended resin film adapted to maintain the weight of contents over an extended storage period. However, examples disclosed in the teaching allow as much as 1.0% weight loss during 4 days after the smoking. Accordingly, there is a need for further improvement for practical usages of the casing.

### SUMMARY OF THE INVENTION

It is an object of the present invention to provide casings for smoking and storage of foodstuffs, capable of being stuffed with foodstuffs such as raw meat for ham and sausage, and allow the foodstuffs to be smoked therein and provide smoked products amenable to storage without any further treatment for extended periods, thus can be used both as the primary casing and as the secondary casing.

With the foregoing and other objects in view, this invention in one aspect resides broadly in a casing for smoking and storage of foodstuffs, which casing comprises a heat-shrinkable tubular laminate including at least one layer of a polyamide resin and at least one layer of a modified polyolefin resin having adhesiveness to said polyamide resin, said layer of modified polyolefin resin having a thickness of from 1 to 25µm, preferably from 3 to 20µm.

In another aspect this invention resides in a casing for smoking and storage of foodstuffs comprising a heat-shrinkable tubular laminate including at least one layer of a polyamide resin, at least one intermediate layer of a modified polyolefin resin having adhesiveness to said polyamide resin, and at least one layer of a polyolefin resin, said modified polyolefin resin layer and the polyolefin resin layer having a total thickness of from 1 to 25µm, preferably from 3 to 20µm. Preferably, the tubular laminate is produced as a seamless tube.

### DESCRIPTION OF THE PREFERRED EMBODIMENT

Polyamide resin layers have low permeability for oxygen gas, but are highly permeable for smoking-gas components. However, polyamide resins also have a high permeability to water vapor and are accordingly poor for preventing water loss by vaporization from materials packed therewith. A modified polyolefin resin layer of 1-25µm thickness, or a double layer of 1-25µm thickness composed of a modified polyolefin resin layer and a polyolefin resin layer, allows permeation of smoking-gas components and prevents water vaporization from materials packed therewith, but shows high permeability for oxygen gas. Multi-layer casings according to the present invention, in combining functional capabilities of these layers, allow foodstuffs to be smoked therein and provide smoked products amenable to storage without any further treatment for extended periods, thus capable of being used both as the primary casing and as the secondary casing.

Casings of the present invention combine the functional capabilities of the polyamide resin layer for prevention of oxygen permeation, and the substantially water impermeability of the modified polyolefin resin layer or modified polyolefin/polyolefin multi-layer to prevent water loss. By this means, the casing of the present invention achieves the functionality of the primary casing and the secondary casing of the prior art. The foodstuffs forced into the casings are more readily smoked and the smoked foodstuffs can be stored for extended periods without further processing.

The advantages of the invention are achieved irrespective of the order of constituent resin layers in the casing with the proviso that the polyamide resin layer must be adjacent to the modified polyolefin resin layer which is selected for its adherence to the polyamide resin layers. For example, when "N" denotes the polyamide resin layer, "M" denotes the modified polyolefin resin layer and "O" denotes the polyolefin resin layer, the present casings include two layer constructions of N(outer)/M(inner) and M/N as well as three layer constructions of N/M/O and O/M/N.

The modified polyolefin resin may be selected from homopolymers or copolymers of olefins like ethylene, propylene, butene, or the like, modified by, for example, graft polymerization with unsaturated carboxylic acids like maleic acid, fumaric acid, or like organic acids, acid anhydrides, acid esters and metal salts, and having adhesive capability with polyamide resins. The modified polyolefin resins may be in mixture with other resin components such as polyolefin resins.

Examples of polyolefin resins for mixing or layering with the modified polyolefin resin include homopolymers and copolymers of olefins, and copolymers with other copolymerizable monomers like vinyl monomers. Typical examples are low or high density polyethylene, polypropylene, polybutene, their copolymers, ionomer resins, ethylene-acrylic acid copolymers, ethylene-vinyl acetate copolymers, and the like. The polyolefin resins can be employed alone or in combination.

The thickness of the modified polyolefin resin layer or the combined thickness of the modified polyolefin resin layer and the polyolefin resin layer should be selected to be within 1-25µm range. A layer thickness greater than 25µm results in insufficient smoking effects or requirement for a longer smoking times, while layers thinner than 1µm results in excessive weight loss from the contents during storage.

Preferably, the polyamide resin is selected from 6-Nylon, 66-Nylon or copolymers thereof. The thickness of the polyamide resin layer is preferably about 5-50µm, more preferably 10-20µm, though a slight deviation is permissible. A thickness of less than 5µm tends to cause excessive oxygen permeation and a thickness of greater than 50µm result in increased smoking times.

Shrinkage of the heat-shrinkable tubular laminate may be in the range of 1 to 45% and preferably about 30% in length and in width when subjected to 95°C × 30sec.

The tubular laminate may be formed by any suitable means such as coextrusion. The shrinkability of the laminate is preferably provided by post extrusion biaxial orientation of the laminate, although it is envisaged that for certain products the laminate may be axially or transversely oriented relative to the finished casing. The laminate may be formed as a coextruded, seamless tubular casing, although it is envisaged that the casing may be formed up from a sheet of laminate by seam welding or bonding.

### DESCRIPTION OF THE PREFERRED EMBODIMENTS

The present invention is further described hereunder by reference to the preferred embodiments described in the following Examples.

### EXAMPLE 1

A polyamide copolymer resin [Nylon 6:66 = 85:15; density: 1.13g/cm³; melt flow rate: 2.6g/10min (230°C); melting point: 200°C; glass transition point: 132°C], a modified linear low-density polyethylene resin [modified L-LDPE grafted with maleic anhydride; density: 0.94g/cm³; melt flow rate: 1.3g/10min (190°C); melting point: 120°C; Vicat softening point: 110°C] and a linear low-density polyethylene resin [L-LDPE; density: 0.915g/cm³; melt flow rate: 2.3g/10min (190°C); melting point: 120°C; Vicat softening point: 102°C] were co-extruded through a mold having a triple ring-formed outlet to mold a tubular laminate. The laminate was biaxially oriented by simultaneous stretching by three times its width and length to obtain a casing composed of a triple layered tubular laminate having 90mm folding width with outer layer of polyamide/15µm; intermediate layer of modified L-LDPE/5µm; inner layer of L-LDPE/20µm; and total thickness of 40µm. The shrinkages at 95°C × 30sec were both 30% in width and in length.

### EXAMPLE 2

In a similar manner as that of EXAMPLE 1, a casing composed of a triple layered tubular laminate having 90mm folding width with outer layer of polyamide/15µm; intermediate layer of modified L-LDPE/5µm; inner layer of L-LDPE/15µm; and total thickness of 35µm was obtained. The shrinkages at 95°C × 30sec were both 30% in width and in length.

### EXAMPLE 3

In a similar manner as that of Example 1, a casing composed of a triple layered tubular laminate having 90mm folding width with outer layer of polyamide/15µm; intermediate layer of modified L-LDPE/5µm; inner layer of L-LDPE/10µm; and total thickness of 30µm was obtained. The shrinkages at 95°C × 30sec were both 30% in width and in length.

### EXAMPLE 4

In a similar manner as that of EXAMPLE 1, a casing composed of a triple layered tubular laminate having 90mm folding width with outer layer of polyamide/15µm; intermediate layer of modified L-LDPE/5µm; inner layer of L-LDPE/5µm; and total thickness of 25µm was obtained. The shrinkages at 95°C × 30sec were both 30% in width and in length.

### EXAMPLE 5

In a similar manner as that of EXAMPLE 1, a casing composed of a triple layered tubular laminate having 90mm folding width with outer layer of polyamide/25µm; intermediate layer of modified L-LDPE/5µm; inner layer of L-LDPE/5µm; and total thickness of 35µm was obtained. The shrinkages at 95°C × 30sec were both 30% in width and in length.

### EXAMPLE 6

A casing composed of a double layered tubular laminate having 90mm folding width with outer layer of polyamide/15µm and inner layer of modified L-LDPE/5µm; and total thickness of 20µm was obtained by peeling off the L-LDPE inner layer of the laminate obtained in EXAMPLE 4.

### EXAMPLE 7

A polyamide copolymer resin [Nylon 6:66 = 85:15] and a modified linear low-density polyethylene resin (modified L-LDPE) were co-extruded through a mold having a double ring-formed outlet to mold a tubular laminate. The laminate was stretched simultaneously and biaxially by three times in width and length to obtain a casing composed of a double layered tubular laminate film having 90mm folding width with outer layer of polyamide/15µm; inner layer of modified L-LDPE/10µm; and total thickness of 25µm. The shrinkages at 95°C × 30sec were both 30% in width and in length.

### EXAMPLE 8

A polyamide copolymer resin [Nylon 6:66 = 80:20; density: 1.14g/cm³; melting point: 191°C], a modified linear low-density polyethylene resin [modified L-LDPE grafted with maleic anhydride; density: 0.94g/cm³; melt flow rate: 1.3g/10min (190°C); melting point: 120°C; Vicat softening point: 110°C] and a linear low-density polyethylene resin [L-LDPE; density: 0.915g/cm³; melt flow rate: 2.3g/10min (190°C); melting point: 120°C; Vicat softening point: 102°C] were co-extruded through a mold having a triple ring-formed outlet to mold a tubular laminate. The laminate was biaxially oriented by simultaneous stretching by three times its width and length to obtain a casing composed of a triple layered tubular laminate having 90mm folding width with outer layer of polyamide/15µm; intermediate layer of modified L-LDPE/5µm; inner layer of L-LDPE/15µm; and total thickness of 35µm. The shrinkages at 95°C × 30sec were both 30% in width and in length.

### EXAMPLE 9

A casing composed of a triple layered tubular laminate having 90mm folding width with outer layer of L-LDPE/15µm; intermediate layer of modified L-LDPE/5µm; inner layer of polyamide/15µm; and total thickness of 35µm was obtained by turning inside out the tubular laminate obtained in EXAMPLE 2.

### COMPARATIVE EXAMPLE 1

A commercially available fibrous casing having a 90mm folding width and 85µm thickness was employed.

### COMPARATIVE EXAMPLE 2

In a similar manner as that of Example 1, a casing composed of a triple layered tubular laminate having 90mm folding width with outer layer of polyamide/20µm; intermediate layer of modified L-LDPE/5µm; inner layer of L-LDPE/25µm; and total thickness of 50µm was obtained. The shrinkages at 95°C × 30sec were both 30% in width and in length.

### COMPARATIVE EXAMPLE 3

A polyamide copolymer resin [Nylon 6:66 = 85:15] was extruded through a mold having a ring-formed outlet to mold a tubular film. The film was stretched simultaneously and biaxially by three times in width and length to obtain a casing composed of a polyamide resin single layered tubular film having 90mm folding width and thickness of 40µm. The shrinkages at 95°C × 30sec were both 25% in width and in length.

### SMOKING TEST

Each 300g of a paste mixture composed of pork mince 69 weight%, water 24 weight%, starch 5 weight% and salt 2 weight% was stuffed in respective casings prepared with laminates obtained in the Examples and Comparative Examples, and the stuffed casings were sealed. The sealed casings were subjected to smoking for 1 hour in a smoking room of ca.75-80°C and ca.40-60% Relative Humidity (RH). The obtained smoked products employing the casing of Examples 1-9 as well as of Comparative Examples 2 and 3 were compared by a plurality of experts in terms of the smell, taste and color with the product of Comparative Example 1 employing the conventional fibrous casing rated as 10 for each evaluating item. The evaluation results are shown in TABLE 1.

**TABLE 1**

| Casing | N-M-O µ | M+O µ | Effect of smoking | | |
|---|---|---|---|---|---|
| | | | smell | taste | color |
| Comparative Example 1 | ― | ― | 10 | 10 | 10 |
| Example 1 | 15/5/20 | 25 | 6 | 7 | 6 |
| Example 2 | 15/5/15 | 20 | 8 | 9 | 7 |
| Example 3 | 15/5/10 | 15 | 8 | 9 | 9 |
| Example 4 | 15/5/5 | 10 | 8 | 9 | 8 |
| Example 5 | 25/5/5 | 10 | 8 | 8 | 7 |
| Example 6 | 15/5/0 | 5 | 9 | 10 | 9 |
| Example 7 | 15/10/0 | 10 | 9 | 10 | 9 |
| Example 8 | 15/5/15 | 20 | 7 | 8 | 7 |
| Example 9 | O-M-N 15/5/15 | 20 | 7 | 7 | 6 |
| Comparative Example 2 | 20/5/25 | 30 | 5 | 5 | 4 |
| Comparative Example 3 | 40/0/0 | 0 | 9 | 9 | 9 |

As clearly seen from Table 1, casings employed in Examples exhibited almost the same smoking effect as those of Comparative Examples 1 or 3 employing the casing conventionally used as primary casings for smoking process. However, insufficient smoking effect was obtained in Comparative Example 2 by the casing having modified polyolefin resin layer and polyolefin resin layer with the combined thickness of 30 µm.

### STORAGE TEST

For the storage test, samples prepared by the above smoking test were stored in their originally packaged states for 10 days at 18°C and 40% Relative Humidity. Decrease in weight of the sample 10 days after the smoking step was measured. The results are shown in Table 2.

**TABLE 2**

| | Permeation of oxygen cc/m²· 24h·atm | Water vapor transmission g/m²·24h | Loss of Weight % | |
|---|---|---|---|---|
| | 23°C·65%RH | 40°C·90%RH | 18°C·40%RH | |
| | | | Just after smoking | 10 days after smoking |
| Comparative Example 1 | 2000 | >3000 | 4.80 | 39.00 |
| Example 1 | 70 | 17 | 0.06 | 0.12 |
| Example 2 | 70 | 18 | 0.06 | 0.12 |
| Example 3 | 70 | 20 | 0.07 | 0.13 |
| Example 4 | 70 | 22 | 0.07 | 0.14 |
| Example 5 | 40 | 21 | 0.07 | 0.13 |
| Example 6 | 70 | 26 | 0.11 | 0.20 |
| Example 7 | 70 | 22 | 0.08 | 0.15 |
| Example 8 | 70 | 18 | 0.06 | 0.12 |
| Example 9 | 70 | 17 | 0.05 | 0.11 |
| Comparative Example 2 | 55 | 15 | 0.06 | 0.11 |
| Comparative Example 3 | 30 | 120 | 1.15 | 2.50 |

For samples employing casings of Examples and Comparative Example 2 showed after 10 days a small weight loss and surfaces with no wrinkle. For the sample of Comparative Example 1 employing the fibrous casing, the weight loss after 10 days was remarkable and mould developed on the surface. For the sample of Comparative Example 3 employing the polyamide resin single layered casing, the weight loss after 10 days was between those of Examples and of Comparative Example 1, but wrinkle was observed on the surface.

Based on the test result shown in Tables 1 and 2, the present casing for smoking and storage of foodstuffs was evaluated from the standpoint of a combination of the primary casing for smoking and the secondary casing for storage, and the results are summarized in Table 3.

**TABLE 3**

| | Effect of smoking | Storage stability | Summarized rating |
|---|---|---|---|
| Comparative Example 1 | excellent | poor | poor |
| Example 1 | good | excellent | excellent |
| Example 2 | good | excellent | excellent |
| Example 3 | good | excellent | excellent |
| Example 4 | good | excellent | excellent |
| Example 5 | good | excellent | excellent |
| Example 6 | good | excellent | excellent |
| Example 7 | good | excellent | excellent |
| Example 8 | good | excellent | excellent |
| Example 9 | good | excellent | excellent |
| Comparative Example 2 | poor | excellent | poor |
| Comparative Example 3 | good | poor | poor |

By use of the present casing, it has become possible to subject raw meat for ham and sausage stuffed in the casing to smoking for obtaining smoked meat products durable without any further treatment for a long period of storage.

It will of course be realized that while the above has been given by way of illustrative example of this invention, all such and other modifications and variations thereto as would be apparent to persons skilled in the art are deemed to fall within the broad scope and admit of this invention as set forth in the claims appended hereto.

## Claims

1. A casing for smoking and storage of foodstuffs comprising a heat-shrinkable tubular laminate including at least one layer of a polyamide resin and at least one layer of a modified polyolefin resin having adhesiveness to said polyamide resin, said layer of modified polyolefin resin having a thickness of from 1 to 25µm.

2. A casing for smoking and storage of foodstuffs according to claim 1, wherein said tubular laminate comprises an outer layer of the polyamide resin and an inner layer of the modified polyolefin resin.

3. A casing for smoking and storage of foodstuffs according to claim 1, wherein said tubular laminate comprises an outer layer of the modified polyolefin resin and an inner layer of the polyamide resin.

4. A casing for smoking and storage of foodstuffs comprising a heat-shrinkable tubular laminate including at least one layer of a polyamide resin, at least one intermediate layer of a modified polyolefin resin having adhesiveness to said polyamide resin, and at least one layer of a polyolefin resin, said modified polyolefin resin layer and the polyolefin resin layer having a total thickness of from 1 to 25µm.

5. A casing for smoking and storage of foodstuffs according to claim 4, wherein said tubular laminate comprises an outer layer of the polyamide resin, an intermediate layer of the modified polyolefin resin and an inner layer of the polyolefin resin.

6. A casing for smoking and storage of foodstuffs according to claim 4, wherein said tubular laminate comprises an outer layer of the polyolefin resin, an intermediate layer of the modified polyolefin resin and an inner layer of the polyamide resin.

7. A casing for smoking and storage of foodstuffs according to anyone of the preceding claims, wherein said tubular laminate is biaxially coextruded seamless tubular laminate.

8. A casing stuffed with foodstuffs for smoking and storage, wherein said casing comprising a heat-shrinkable tubular laminate including at least one layer of a polyamide resin and at least one layer of a modified polyolefin resin having adhesiveness to said polyamide resin, said layer of modified polyolefin resin having a thickness of from 1 to 25µm.

9. A casing stuffed with foodstuffs for smoking and storage, wherein said casing comprising a heat-shrinkable tubular laminate including at least one layer of a polyamide resin, at least one intermediate layer of a modified polyolefin resin having adhesiveness to said polyamide resin, and at least one layer of a polyolefin resin, said modified polyolefin resin layer and the polyolefin resin layer having a total thickness of from 1 to 25µm.
